Europäisches Patentamt

European Patent Office

Office européen des brevets

(11) Publication number: **0 493 880 A2**

# EUROPEAN PATENT APPLICATION

(21) Application number: **91310598.7**

(22) Date of filing: **18.11.91**

(51) Int. Cl.⁵: **G11B 15/60**, G11B 15/61

(30) Priority: **27.12.90 JP 414951/90**

(43) Date of publication of application:
**08.07.92 Bulletin 92/28**

(84) Designated Contracting States:
**DE FR GB**

(71) Applicant: **SONY CORPORATION**
**7-35, Kitashinagawa 6-chome Shinagawa-ku**
**Tokyo(JP)**

(72) Inventor: **Kobayashi, Hiroshi, c/o SONY**
**CORPORATION**
**7-35 Kitashinagawa 6-chome**
**Shinagawa-ku, Tokyo(JP)**

(74) Representative: **Ayers, Martyn Lewis Stanley**
**et al**
**J.A. KEMP & CO., 14 South Square, Grays Inn**
**London WC1R 5LX(GB)**

(54) **Tape guide roller for use in video tape recorder.**

(57) In a tape transport portion of a tape recording and reproducing apparatus, the height of a tape is regulated without applying an excessive force to the tape. In a tape guide roller having a roller (9) which is brought in rotatable contact with tape (2) and a flange (10) which regulates the height of the tape (2), the flange (10) has a tapered surface (15) opposing the inner surface of the tape (2) and a force for regulating the height of the tape (2) is generated by the cooperation of both a tape regulating end face (13) of the flange (10) and the tapered surface (15). Since the tape height regulating force is generated by two different parts, i.e., the tape regulating end face (13) of the flange (10) and the tapered surface (15), the tape (2) can be prevented from being buckled by a force applied thereto from a tape regulating end face of a flange unlike the prior art. Thus, the tape guide roller of the invention becomes resistant to tape damage.

FIG. 4

EP 0 493 880 A2

The present invention generally relates to tape guide rollers and, more particularly, is directed to a tape guide roller for use in a tape transport portion of a tape recording and/or reproducing apparatus and to a tape transport mechanism, e.g. of such an apparatus.

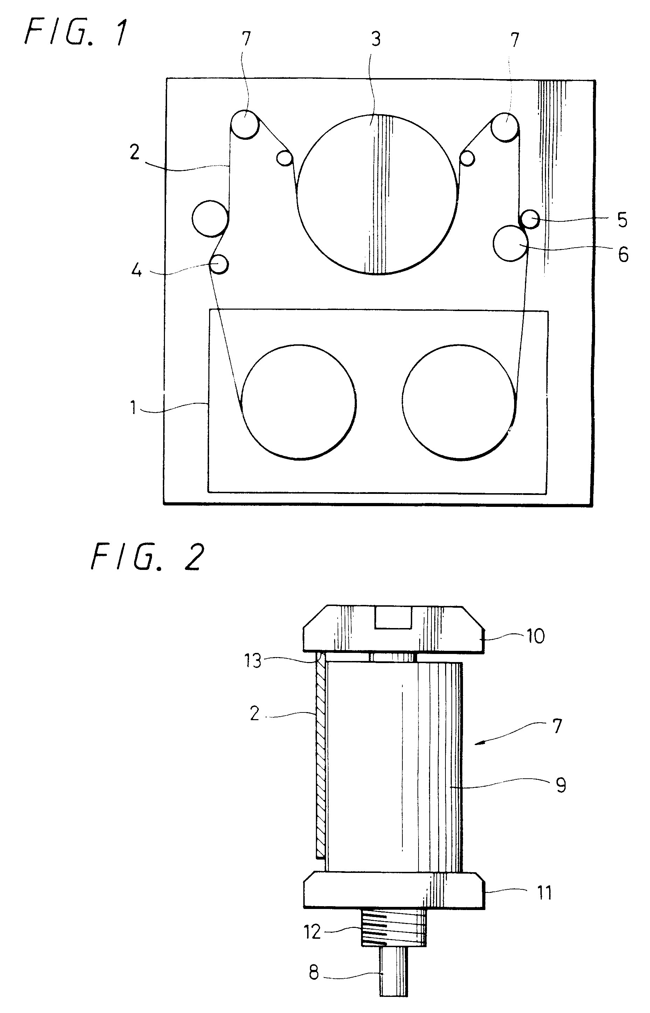

Figure 1 of the accompanying drawings schematically illustrates an example of a tape transport system of a tape recording and reproducing apparatus, e.g. an 8mm video tape recorder (8mm VTR).

In figure 1, reference numeral 1 depicts a tape cassette and reference numeral 2 a tape (magnetic tape) accommodated within the tape cassette 1. In use, the tape 2 is withdrawn from the tape cassette 1 and wrapped around a magnetic head drum 3, thereby transported in this state. Reference number 4 depicts a tension regulator, 5 a capstan and 6 a pinch roller. Tape guide rollers 7 are disposed at both sides of the magnetic head drum 3 and the height of the tape 2 relative to the magnetic head drum 3 is regulated by these tape guide rollers 7.

Figure 2 of the accompanying drawings shows an arrangement of this kind of conventional tape guide roller 7 which is composed of a roller 9 pivotally supported to a roller shaft 8, and upper and lower flanges 10 and 11 attached to the roller shaft 8 above and below the roller 9. The tape guide roller 7 is secured to a base portion (not shown) of a tape recording and reproducing transport mechanism by means of a screw portion 12.

In use, the tape 2 is transported while in rotatable contact with the roller 9, and the height thereof is regulated by the upper and lower flanges 10 and 11. More specifically, in the illustrative example of Figure 2, a lower end surface of the upper flange 10 serves as a tape regulating end face 13 and the height of the tape 2 is regulated by the lateral edge of the tape 2 abutting the tape regulating end face 13.

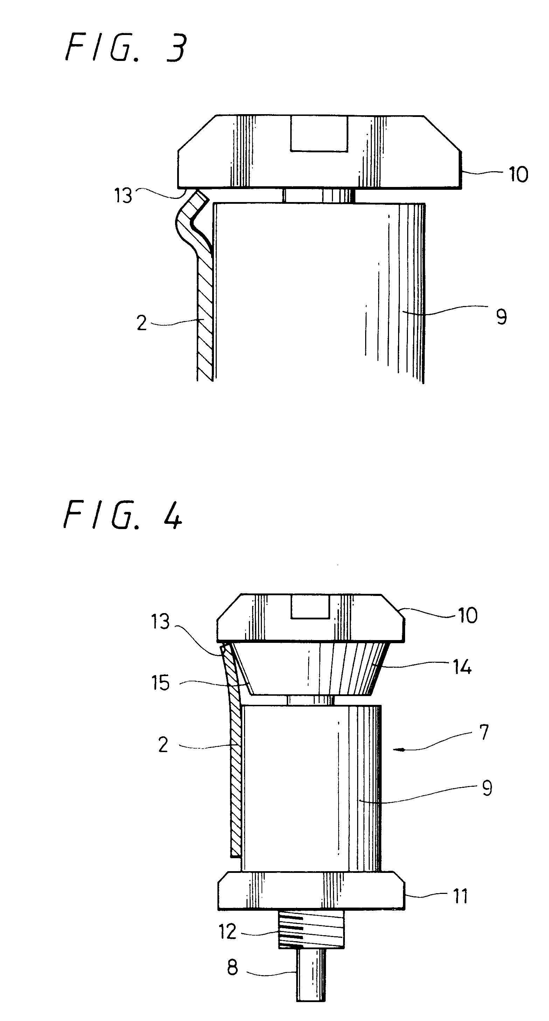

The tape guide roller 7 thus arranged regulates the height of the tape 2 at the tape regulating end face 13 of the upper flange 10 so that, if the tape is thin or weak, it will be easily buckled at its tape edge by a tape regulating force applied thereto from the tape regulating end face 13 of the upper flange 10 as shown in figure 3. Accordingly, it is to be noted that this conventional tape guide roller 7 is not adequately designed to prevent the tape from being damaged, broken or crinkled. Furthermore, in order to keep the stability of the tape transport system without tape damage or the like, the tape path must be adjusted with high accuracy, which is very difficult in actual practice, and the assembly parts must be produced with high accuracy.

Accordingly, it is an object of the present invention to provide an improved tape guide roller in which the aforementioned shortcomings and disadvantages encountered with the prior art can be reduced or eliminated.

An additional object of the present invention is to provide a tape guide roller far use in a tape recording and reproducing apparatus such as an 8mm VTR or the like.

According to the present invention, there is provided a tape guide roller provided in a tape transport portion of a tape recording and reproducing apparatus, comprising:

(a) a roller pivotally supported to a roller shaft so as to be capable, in use, of coming into rotatable contact with a tape; and

(b) a flange having means for generating a tape height regulating force when the height of the tape changes, the force generating means comprising a tapered surface for opposing an inner surface of the tape and a tape regulating end face with which a tape edge of said tape will come into slidable contact if the tape slides over the tapered surface.

The invention also provides a tape transport mechanism for a recording and/or reproducing apparatus such as an 8mm VTR or the like incorporating the roller of the invention.

The invention will be further described by way of non-limitative example with reference to the accompanying drawings, in which:-

Figure 1 shows a schematic diagram used to explain a tape recording and reproducing apparatus having tape guide rollers;

Figure 2 shows a side view of an example of a tape guide roller according to the prior art;

Figure 3 shows a fragmentary, enlarged side view of the example of the prior art tape guide roller shown in figure 2, which illustrates the buckling of the tape;

Figure 4 shows a side view of a tape guide roller according to a first embodiment of the present invention;

Figure 5 shows a schematic diagram used to explain the dimensional relation of the parts of the first embodiment of the present invention; and

Figure 6 shows a side view of the tape guide roller according to a second embodiment of the present invention.

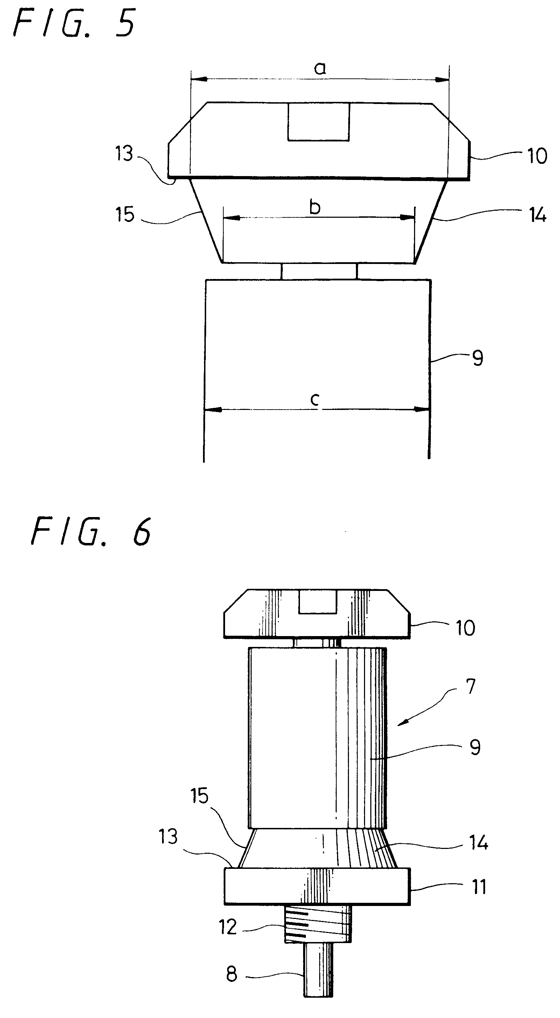

Referring to the drawings in detail, and initially to figures 4 and 5, a first embodiment of the present invention will be described, wherein like parts corresponding to those of the example of the prior art shown in figures 2 and 3 are marked with the same references and therefore need not be described in detail.

In this embodiment, as shown in figures 4 and 5, and downwardly-protruding tape transport portion 14 is unitarily formed with the lower surface of the upper flange 10 so as to permit the transport of the tape 2. It will be apparent that the portion 14 does not rotate, as it is unitary with the shaft about which the roller 9 rotates. A circumferential surface of the tape transport 14, i.e., the surface opposing the inner surface of the tape 2 is formed as a tapered surface 15, the outer diameter of which decreases in direction towards the roller 9. The maximum diameter $a$ of the tape transport portion 14 is larger than an outer diameter $c$ of the roller 9 and the minimum diameter $b$ thereof is smaller than the outer diameter $c$ of the roller 9. The minimum diameter $b$ of the tape transport portion 14 might be equal to the outer diameter $c$ of the roller 9. Since the tape transport portion 14 having the tapered surface 15 is unitarily formed with the upper flange 10, the height (length) of the roller 9 can be reduced accordingly, as compared with the example of the prior art. The rest of elements and parts of this embodiment is the same as that of the example of the prior art.

In the thus arranged tape guide roller 7 of this embodiment, the tape 2 is transported while in rotatable contact with the circumferential surface of the roller 9, and the height of the tape 2 is regulated by the cooperation of the tape regulating end face 13 of the upper flange 10 and the tapered surface 15 of the tape transport portion 14. That is, the tape edge of the tape 2 slidably contacts with the tape regulating end face 13 of the upper flange 10 and also slidably contacts with the tapered surface 15 of the tape transport portion 14 to generate a regulating force which acts downwardly on the tape 2 (force which regulates the upward movement of the tape 2), thereby regulating the height of the tape 2.

Since the portion which generates the height regulating force for the tape 2 is divided into the tape regulating end face 13 of the upper flange 10 and the tapered surface 15 of the tape transport portion 14, the tape 2 can be prevented from being buckled unlike the prior art. To be more concrete, while in the prior art the height of the tape 2 is regulated only by the tape regulating end face 13 of the upper flange 10, in this embodiment, the height regulating force for regulating the height of the tape 2 is generated by the cooperation of both the tape regulating end face 13 of the upper flange 10 and the tapered surface 15 of the tape transport portion 14, which the tape contacts first if it rides up the roller 9, whereby the height of the tape 2 can be regulated without applying an excessive force to the tape 2. Accordingly, unlike the prior art, the tape 2 can be prevented from being buckled and the tape guide roller of this embodiment becomes less prone to damaging the tape.

By way of experiment, the inventor has made the tape guide roller of this embodiment and mounted it on the mechanical deck of the 8mm VTR for test. In the experiment, tape tensions at which the tape will be damaged were measured during the tape running. The measured results demonstrate that the roller permits the tape tension at the onset of tape damage to be 3 to 3.5 times that of the prior art. That is, the tape guide roller of this embodiment enables a tension of 3 to 3.5 times that of the prior art before damage of the tape occurs. Since the tape guide roller of the present invention becomes resistant to the tape damage as described above, the stability of the tape transport system can be maintained with ease, and the number of steps necessary to adjust and check the tape path can be reduced considerably. Also, the accuracy of the assembly parts need not be as great as that of the prior art.

A second embodiment of the tape guide roller according to the present invention will be described below with reference to figure 6. Also in figure 6, like parts corresponding to those of figure 4 and 5 are marked with the same references and therefore need not be described.

While the height of the tape 2 is regulated by the upper flange 10 of the upper and lower flanges 10 and 11 in the first embodiment shown in figures 4 and 5, the present invention is not limited thereto and such a variant is also possible that the height of the tape 2 might be regulated on the lower flange 11 side. In this case, as shown in Figure 6, an upper end face of the lower flange 11 is served as the tape regulating end face 13 and the lower flange 11 is unitarily formed with the tape transport portion 14 whose tapered surface 15 is reduced in diameter at the roller 9 side.

Both variants may be used in the same tape transport paths to give regulation of the tape height in both senses. It will be apparent that there could be the tape regulating surfaces at both ends of the roller, though that would require the assembly to be fabricated in a manner which would permit the roller 9 to be mounted on the central region of the shaft.

As is clear from the foregoing description, since the tape guide roller of the present invention is constructed so as to generate the tape height regulating force by the cooperation of both the tape regulating end face of the flange and the tapered surface of the tape transport portion, the tape height can be regulated without applying an excessive force to the tape, thereby preventing the tape from being buckled at its end edge unlike the prior art. Thus, the tape guide roller of the invention becomes resistant to the tape damage. Also, the stability of the tape transport system can be maintained with ease.

Having described the preferred embodiments of the invention with reference to the accompanying drawings, it is to be understood that the invention is not limited to those precise embodiments and that various changes and modifications thereof could be effected by one skilled in the art without departing from the scope of the invention as defined in the appended claims.

**Claims**

1. A tape guide roller provided in a tape transport portion of a tape recording and reproducing apparatus, comprising:
   (a) a roller pivotally supported to a roller shaft so as to be capable, in use, of coming into rotatable contact with a tape; and
   (b) a flange having means for generating a tape height regulating force when the height of the tape changes, the force generating means comprising a tapered surface for opposing an inner surface of the tape and a tape regulating end face with which a tape edge of said tape will come into slidable contact if the tape slides over the tapered surface.

2. A tape guide roller according to claim 1, wherein said flange has said tape regulating end face formed on its larger diameter portion at the roller side and said tapered surface is protrusively and unitarily formed with said flange at its portion near an inner diameter side of said tape regulating end face.

3. A tape guide roller according to claim 1 or 2, wherein said tapered surface opposing an inner surface of said tape is reduced in diameter towards said roller side.

4. A tape guide roller according to claim 1, 2 or 3, wherein said tapered surface of said flange has a maximum diameter larger than an outer diameter of said roller and a minimum diameter equal to or smaller than the outer diameter of said roller.

5. A tape guide roller according to any one of the preceding claims, wherein the end face is perpendicular to the axis of the roller.

6. A tape transport mechanism having a series of guide elements for guiding a tape to follow a tape transport path, at least one of the guide elements being a roller according to any one of the preceding claims for regulating the height of the tape transverse to the tape path.

FIG. 1

FIG. 2

# FIG. 3

# FIG. 4

# F I G. 5

# F I G. 6